# EUROPEAN PATENT APPLICATION

(11) **EP 4 756 385 A1**
(43) Date of publication of application: **10.06.2026**
(21) Application number: 25212609.9
(22) Date of filing: 31.10.2025
(51) Int. Cl.: G01F 1/66, G01F 1/667, G01F 15/14

(54) **STATIC FLUID METER WITH TWO-PIECE PLASTIC HOUSING**

(30) Priority: 09.12.2024 US 202418974035
(71) Applicant: Itron, Inc., Liberty Lake, WA 99019 (US)
(72) Inventor: PASTOR, Gregory, Liberty Lake, 99019 (US); DARRAS, Arnaud, Liberty Lake, 99019 (US)
(74) Representative: Morrall, Jonathan Ian McLachlan

(57) **Abstract**

A multi-piece static fluid meter includes a register and a separate meter body. The register includes a first housing including a cavity which contains an ultrasonic transducer assembly and electronic component(s) of the static fluid meter. The meter body includes a second housing. When assembled, the first housing comprises a first portion of a flow passage and the second housing defines a second portion of the flow passage. The first and second housings can be formed of a thermoplastic and thermoplastically welded together. In some examples, one or more reflectors may be disposed in the flow passage and configured to reflect signals from the ultrasonic transducer assembly through a flow of water or other fluid to be measured. The register can include multiple mating surfaces configured to mate with different meter body configurations, allowing a single register design to be used with multiple meter body configurations.

## Description

### BACKGROUND

Static water meters are used to measure water consumption in residential, commercial, and industrial settings. Unlike traditional mechanical meters, which use moving mechanical parts to measure flow, static water meters measure flow by passing a signal through a portion of the water to be measured and measuring a resulting signal. One type of static water meter is an ultrasonic meter, which uses an emitter (e.g., a first ultrasonic transducer) to emit a sound wave at a first location and measures the time it takes the sound wave to travel through the water being measured to a receiver (e.g., second ultrasonic transducer) located upstream or downstream of the first location. The time it takes the sound wave to travel from the sound emitter through the water to be measured, to the sound receiver, is the transit time (or time-of-flight), from which the flow rate can be computed. The flow rate over time can be used to determine the consumption of water at the service site.

Static water meters typically consist of multiple components including a casing to house ultrasonic transducers and electronics, a body with inlet and outlet connections, and a flow tube assembly for measuring water flow. Traditional static water meter designs often involve complex assemblies with numerous parts made from different materials such as brass, polymers, and stainless steel. The various parts are secured together by fasteners and sealed with one or more gaskets.

The multi-component nature of conventional static water meters presents several challenges. Manufacturing and assembling meters with many discrete parts can be costly and timeconsuming. The use of multiple materials and components also introduces potential points of failure, particularly at interfaces between parts where water leakage may occur. Additionally, the complexity of these designs can make it difficult to achieve consistent quality and performance across manufactured units.

Another limitation of existing static water meter architectures is their lack of adaptability. Meters are typically designed for a specific pipe size and configuration, requiring different models of meters to be produced for various applications. This reduces manufacturing efficiency and increases inventory management complexity for meter producers and utilities.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 illustrates a sectional view of a first example static fluid meter with a W-shaped ultrasonic signal transmission path, showing the integration of measurement components and electronics in a compact housing structure.
FIG. 2 illustrates a sectional view of a second example static fluid meter with a U-shaped transmission path, demonstrating an alternative ultrasonic signal reflection configuration.
FIG. 3 illustrates a sectional view of a third example static fluid meter with a V-shaped transmission path, showing a simplified ultrasonic signal reflection arrangement.
FIG. 4 illustrates a sectional view of a fourth example static fluid meter with a face-to-face transmission path.
FIGS. 5A-5B illustrate perspective and side views of a fourth example static fluid meter having a modular two-piece design including a register coupled to a meter body which includes a metrologic flow tube.
FIGS. 5C-5D illustrate sectional views of the fourth example static fluid meter of FIGS. 5A-5B, showing internal components and multiple mating surfaces for different flow tube sizes.
FIGS. 5E-5G illustrate various views of components of the fourth example static fluid meter of FIGS. 5A and 5B, detailing the register and meter body designs.
FIGS. 6-8 illustrate orthogonal cross-sectional views of the register of the fourth example static fluid meter, demonstrating compatibility with multiple meter body sizes.

### DETAILED DESCRIPTION

As discussed above, traditional static water meter designs often involve complex assemblies with numerous parts made from different materials, leading to challenges in manufacturing, assembly, and potential points of failure. Additionally, the lack of adaptability in existing meter architectures requires different models to be produced for various pipe sizes and configurations, reducing manufacturing efficiency and increasing inventory management complexity.

This application relates to a multi-part static fluid meter comprising a register and a separate meter body. The register includes a first housing having a cavity which contains an ultrasonic transducer assembly and electronic component(s) of the static fluid meter. A surface of the register defines a first portion of a flow passage configured to receive a flow of fluid to be measured. As used herein, a flow passage is a conduit or channel within the static fluid meter through which fluid to be measured flows. The flow passage comprises or contains a metrologic flow tube. The meter body includes a second housing, which is separate from the first housing of the register, the second housing defining a second portion of the flow passage. Thus, in some examples, the flow passage is collectively defined by a first portion of the first housing of the register and a second portion of the second housing of the meter body. A cross section of the flow passage may be continuous and uniform or it may vary along a length of the flow passage. In some examples the flow passage may have a generally cylindrical cross section at each end (e.g., at an inlet and outlet thereof) to facilitate connection to a pipe of a fluid distribution system, while between the inlet and the outlet the cross section of the flow passage may transition (gradually or abruptly to a rectangular cross section, or any other cross section to achieve a desired measurement resolution. The ends of the flow passage may have various diameters to accommodate different pipe sizes commonly used in water or other fluid distribution systems. In some examples, an interior of the first housing is fluidly isolated from the flow passage, protecting electronic components within the register from moisture.

One or more reflectors may be disposed in the flow passage and configured to reflect signals from the ultrasonic transducer assembly through a flow of fluid to be measured. Reflectors may be chosen based on their acoustic impedance (e.g., based on stiffness, speed of sound within the material, material density, Poisson ratio), their ultrasonic wave damping characteristics (lower wave damping characteristics make better reflectors), surface roughness (which should be lower than the ultrasonic wavelength used). Also, in the case of meters for potable water, the reflectors should be certified for water potability. By way of example and not limitation, reflectors may be made of metal, plastic, ceramic, glass, or other materials that are design to reflect the ultrasonic signals being emitted by the ultrasonic transducers. Certain reflector materials may work better for certain types of fluid to be measured. By way of example and not limitation, plastic and glass reflectors are typically not used for static water meters, but may be used in static gas meters. Reflectors may be positioned to create specific transmission paths for accurate flow measurement. In some examples described herein, multiple reflectors may be used, with one or more reflectors disposed in the second housing of the meter body and/or on an exterior surface of the first housing within the flow passage. The reflector(s) may be disposed in, on, or coupled to the first housing of the register and/or the second housing of the meter body. For instance, in some examples at least one reflector is disposed in the second housing and configured to reflect a signal from the ultrasonic transducer assembly through at least a portion of the flow passage to measure a flow of fluid through the flow passage. However, in other examples (e.g., face-to-face transducer arrangements), the reflector(s) can be omitted. The register can include multiple mating surfaces configured to mate with different meter body configurations, allowing a single register design to be used with multiple meter body configurations.

In some instances, the first housing and the second housing are formed of a same material, such as a thermoplastic material. Using a thermoplastic material allows the first housing and second housing to be molded (e.g., using injection molding) into the desired shapes and then coupled or bonded together using thermoplastic welding. Injection molding is a manufacturing process in which molten thermoplastic material is injected into a mold, then cooled and solidified to form a part. This process can produce parts with complex shapes and fine details, making it suitable for forming the housings of any of the example static fluid meters described herein, including support structures and/or mounts for the sensors, reflectors, and electronic components of the static fluid meters (e.g., transducers, reflectors, etc.). The use of injection molding also allows for the overmolding of certain components (e.g., transducers and/or reflectors) into the two housings, simplifying the assembly process and avoiding the need for separate alignment or calibration operations after manufacturing. In some cases, the material properties of the polymer, part designs, injection process controls, and mold quality can produce highly accurate parts; the surfaces of which are of high quality out of the mold, and do not require additional machining or finishing processes. This can further reduce the manufacturing cost and complexity of the example static fluid meters described herein.

In some examples, the thermoplastic material is a plastic, such as polyphenylene sulfide (PPS). This material has good resistance to degradation by water, including chloride, and good resistance to water permeability. It also has good properties for the transmission of ultrasonic signals, which is beneficial for the operation of the ultrasonic transducer assembly. Other, nonlimiting examples of thermoplastic materials from which the first housing and second housing can be made include polyethylene, polypropylene, polycarbonate, polyamide (nylon), and blends or copolymers thereof. In some examples, the first housing and/or the second housing, or portions of one or both housings, may include a fiber reinforcing material such as glass or carbon fibers (e.g., 40% glass fiber reinforcement) to add additional strength and rigidity to the parts. When used, the reinforcing material may be chosen to use materials that do not significantly attenuate or interfere with the ultrasonic wave transmissions of the transducers. While certain example polymers and reinforcing materials are discussed herein, in practice any thermoplastic polymer (with or without any reinforcing materials) that provides sufficient mechanical strength, ultrasonic wave transmission, and protection against fluid ingress may be used. Also, in the case of meters for potable water, the housing materials (thermoplastic material and any reinforcing material) should be certified for water potability.

As mentioned above, in some instances, the first housing comprises multiple mating surfaces configured to mate with multiple different meter body configurations. This design allows a single register to be compatible with various meter bodies, enhancing modularity and reducing manufacturing complexity. The meter body mates with one mating surface of the multiple mating surfaces of the first housing. In some examples, the flow passage of the meter body has a diameter ranging from about 10 millimeters to about 50 millimeters, accommodating different pipe sizes commonly used in fluid distribution systems.

In some instances, the ultrasonic transducer assembly comprises a first ultrasonic transducer (emitter) and a second ultrasonic transducer (receiver). In some examples, the ultrasonic transducers may be positioned facing one another in a face-to-face transmission path; while in other examples, the ultrasonic transducers may be positioned in other configurations, and one or more reflectors may be used to direct ultrasonic transmissions from the first ultrasonic transducer toward the second ultrasonic transducer and vice versa. In such examples, the reflector(s) may be disposed in or adjacent the flow passage, and positioned to reflect a signal from the first ultrasonic transducer along a transmission path toward the second ultrasonic transducer. This configuration may create a W-shaped, U-shaped, or V-shaped transmission path, depending on the number and arrangement of reflectors. In some examples, multiple reflectors are used, with a first reflector disposed in the second housing, a second reflector disposed on an exterior surface of the first housing within the flow passage, and a third reflector disposed in the second housing.

By making both sections of a thermoplastic material and coupling them together using thermoplastic welding, a uniform, repeatable, and reliable fluid tight seal can be formed between the two components. This eliminates the need for gaskets and fasteners used in conventional static water meters, which are prone to leakage and/or failure over time. Various thermoplastic welding techniques may be employed, including but not limited to infrared welding, vibration welding, hot plate welding, ultrasonic welding, and laser welding. Infrared welding involves heating the surfaces to be joined using an infrared heat source, then pressing the heated surfaces together to form a bond. Vibration welding involves vibrating one of the parts to be joined against the other at a high frequency, generating heat through friction that melts the thermoplastic material and forms a bond. Hot plate welding involves pressing the parts to be joined against a heated plate to melt the thermoplastic material, then pressing the melted surfaces together to form a bond. Ultrasonic welding involves using high-frequency ultrasonic vibrations to generate heat through friction at the interface of the parts to be joined, melting the thermoplastic material and forming a bond. Laser welding involves using a laser to generate heat at the interface of the parts to be joined, melting the thermoplastic material and forming a bond.

The techniques discussed herein can improve the functioning of static fluid meters in several ways. By utilizing a two-piece plastic housing design with thermoplastic welding, the meter achieves a more uniform, repeatable, and reliable fluid tight seal between components compared to traditional multi-part designs. This can reduce the potential for leaks and ingress of moisture or other contaminants that could damage internal electronics.

The modular design with multiple mating surfaces on the register allows a single register to be compatible with different meter body sizes. This improves manufacturing efficiency by reducing the number of unique parts that need to be produced and inventoried. It also provides utilities with more flexibility to adapt meters to different pipe configurations in the field.

The simplified two-piece construction with integrated flow tube and reflectors allows for tighter manufacturing tolerances and more consistent alignment of ultrasonic transducers and reflectors. This can lead to improved accuracy and reliability of flow measurements compared to meters assembled from many discrete parts. The plastic construction also avoids degradation of wireless transmissions that can occur with metal meter housings.

Overall, the design enables production of static fluid meters with fewer components, reduced assembly steps, improved sealing, and greater adaptability to different installation requirements. This can translate to meters that are more cost-effective to manufacture while providing enhanced performance and longevity in real-world deployments.

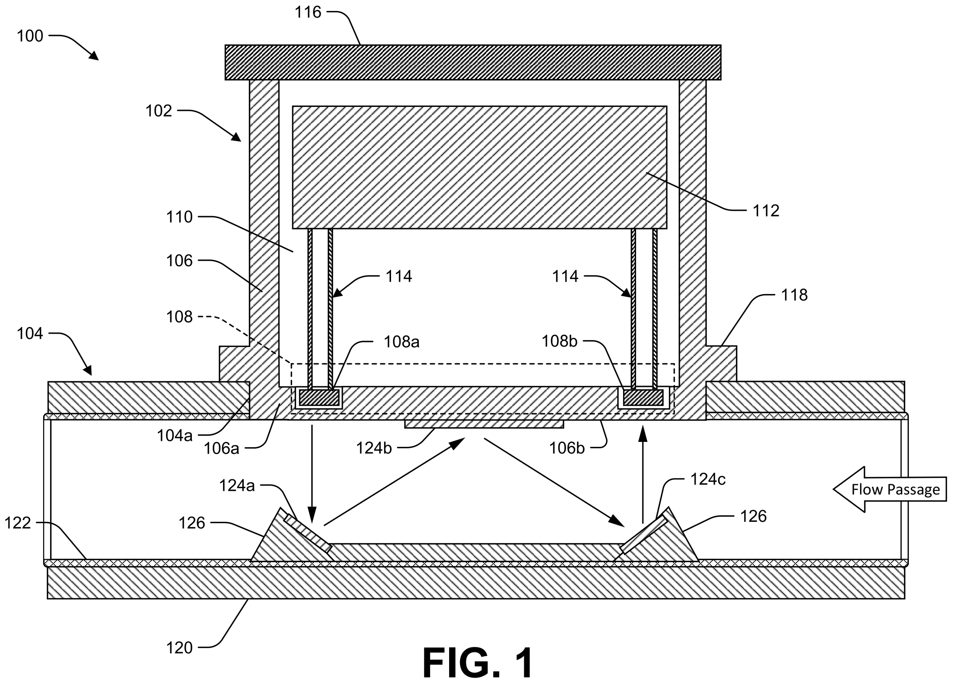

FIG. 1 illustrates a sectional view of a first example multi-part static fluid meter 100. The multi-part static fluid meter 100 comprises a register 102 that couples to a meter body 104. The register 102 includes a first housing 106 and the meter body 104 includes a second housing 220. A lower portion 106a of the first housing 106 of the register 102 fits within an opening 104a in an upper surface of the second housing 120 of the meter body 104. Thus, a bottom surface 106b of the first housing 106 defines a first portion of a flow passage and an interior of the second housing 120 defines a second portion of the flow passage. The flow passage is configured to receive a flow of fluid to be measured. The register 102 also includes an ultrasonic transducer assembly 108 disposed in the first housing 106. In this example, the ultrasonic transducer assembly 108 includes multiple ultrasonic transducers, including a first ultrasonic transducer 108a and a second ultrasonic transducer 108b. The first housing 106 of the register 102 in this example is generally cylindrical and includes a cavity 110 for receiving electronic components 112 of the static fluid meter. However, in other examples, the register 102 can be a rectangular prism, a parallelepiped, or any other volumetric shape sized and shaped to house the electronic components 112 and mate with the meter body 104. The electronic components 112 may include one or more processors, non-transitory computer-readable media, metrology components, a transducer controller to control the transducer assembly, a power supply (e.g., battery, mains power, etc.), one or more radios or other communication components, a display, input(s) and/or output(s), and any other components common to static fluid meters. The transducers 108a and 108b may be coupled to the transducer controller and/or other electronic components via one or more leads 114. A cover 116 may be coupled to housing 106 to seal the cavity 110. In some examples, the display (if provided) may be disposed in or on the cover 116 or the first housing 106.

The meter body 104 is separate from and coupled to the register 102. Specifically, in this example, the second housing 120 of the meter body 104 includes the opening 104a sized to receive the lower portion 106a of the housing 106 of the register 102. A flange 118 disposed around a perimeter of the first housing 106 of the register 102 overlaps with and contacts an exterior surface of the meter body 104 surrounding the opening. The flange 118 can be coupled to the meter body 104 to seal the register 102 to the meter body. By manufacturing the meter body 104 as a separate component from the register 102, each component can be injection molded individually which greatly simplifies the molds and reduces the cost and complexity of manufacturing. The meter body 104 includes the second housing 120 defining the second portion of the flow passage. In some examples, the meter body 104 may include a liner 122 disposed within the flow passage. The liner 122 may define all or part of a metrologic flow tube. As discussed further below, one or more reflectors may be coupled to or otherwise disposed in or on the liner 122 directly or via one or more support structures. In that case, the liner 122, reflector(s), and support structure(s) may comprise a modular assembly that can be inserted into the second housing 120 of the meter body 104 during manufacturing or assembly. However, in other examples, the liner 122 may be omitted and the reflector(s) and/or support structure(s) may be coupled to or disposed in or on an interior surface of the second housing 120.

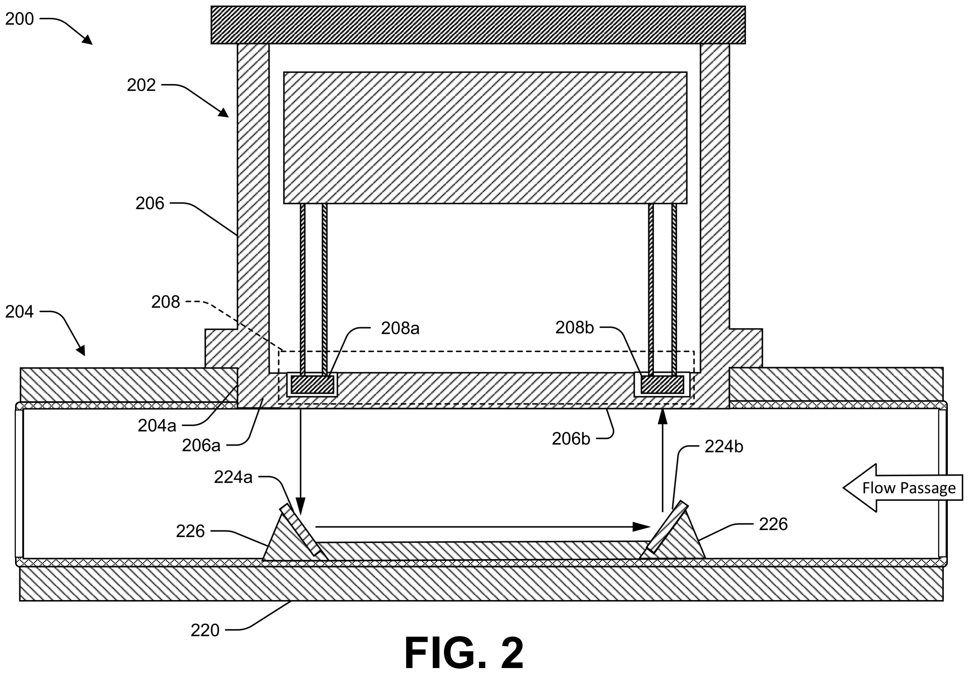

The example static fluid meter 100 of FIG. 1 includes three reflectors, including a first reflector 124a, a second reflector 124b, and a third reflector 124c. Some or all of the reflectors may be held in a desired position and/or orientation by one or more support structures 126. In this example, the first reflector 124a and the third reflector 124c are disposed in the second housing 120 of the meter body, while the second reflector 124b is disposed on a bottom, exterior surface of the first housing 106 of the register, such that the three reflectors are disposed in the flow passage defining a W-shaped transmission path configured to reflect a signal from the ultrasonic transducer assembly 108 through the flow passage in a generally W-shaped path. However, in other examples, different shapes and configurations of transmission paths are possible, such as a U-shaped path, a V-shaped path, or a linear (face-to-face) path, depending on the number and arrangement of the reflectors. Examples of other transmission paths are described in relation to FIG. 2, FIG. 3, and FIG. 4. The support structures 126, when present, may be formed integrally with (e.g., molded features of) the first housing 106, the second housing 120, and/or the liner 122 (if a liner is used). Additionally or alternatively, one or more support structures may be formed separately and coupled to the first housing 106, the second housing 120, and/or the liner 122 (if a liner is used) by, for example, a fastener, adhesive, welding, or other suitable coupling mechanism.

In some cases, the first housing 106 and the second housing 120 are formed of a same material, such as any of the thermoplastic materials described herein. In some examples, the first housing 106 is thermoplastically welded to the second housing 120, providing a secure and fluid tight connection between the two components. In some aspects, an interior (e.g., cavity 110) of the first housing 106 is fluidly isolated from the flow passage, protecting electronic components within the register 102 from exposure to moisture or other contaminants.

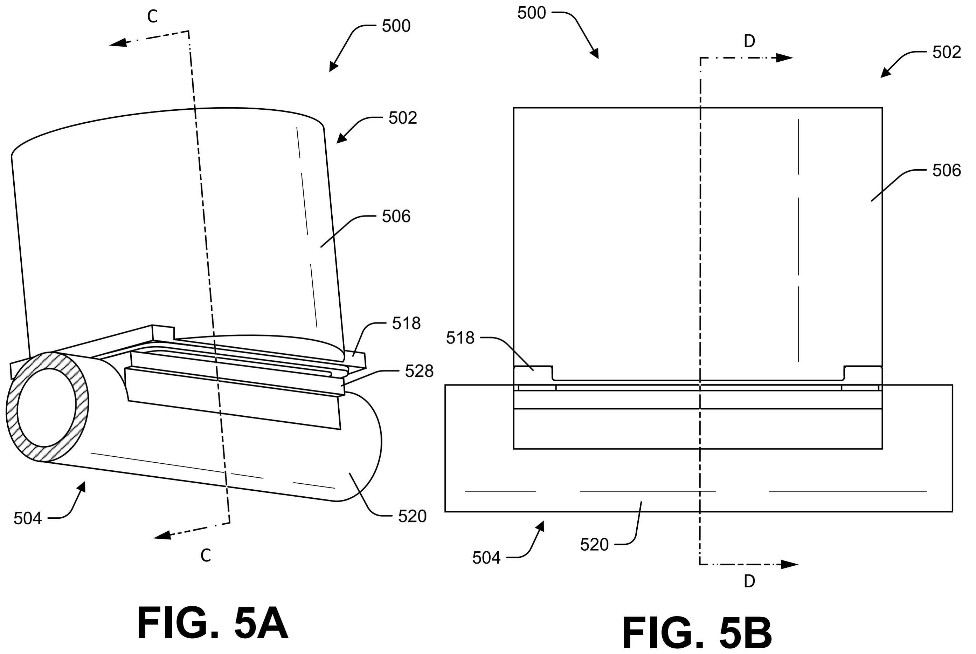

In some examples, the first housing 106 comprises multiple mating surfaces, such as a first mating surface and a second mating surface, which will described further in relation to FIGS. 5A-5G. While two mating surfaces are illustrated in this example, in other examples three or more distinct mating surfaces may be provided on the first housing 106. The inclusion of multiple mating surfaces configures the first housing 106 to mate with multiple different meter body configurations. This design allows a single register 102 to be compatible with various meter bodies 104, enhancing modularity and reducing manufacturing complexity. The meter body 104 mates with one mating surface of the multiple mating surfaces of the first housing 106. In some examples, meter bodies 104 that can mate with the register 102 may have diameters ranging from about 10 millimeters to about 50 millimeters (e.g., 15 millimeters, 20 millimeters, 32 millimeters, etc.), accommodating different pipe sizes commonly used in water or other fluid distribution systems. However, meter bodies having flow passage diameters larger and smaller than this range are also within the scope of this disclosure.

The flow passage is configured to receive a flow of fluid, such as water, to be measured. During operation, fluid enters the flow passage at one end of the meter body 104, flows through the flow passage, and exits at the other end of the meter body 104. The flow of fluid through the flow passage may be measured by the ultrasonic transducer assembly 108, which emits ultrasonic signals through at least a portion of the flow passage and receives the signals to measure the flow of fluid through the flow passage. The measured flow data may be processed by the electronic components 112 to determine the flow rate and/or total volume of fluid that has flowed through the flow passage.

The ultrasonic transducer assembly 108 may be controlled by a transducer controller, which may be one of the electronic components 112 housed within the cavity 110 of the first housing 106. The transducer controller may be configured to control the operation of the first ultrasonic transducer 108a and the second ultrasonic transducer 108b, such as controlling the timing and frequency of the emitted ultrasonic signals and processing the received signals to determine the flow rate of the fluid through the flow passage. The flow rate can be computed based on the measured time-of-flight (TOF) of the signal and the transmission path geometry (e.g., dimensions and orientations of transducers and reflectors) used.

The electronic components 112 of the static fluid meter 100 may be powered by a power supply, which may be housed within the cavity 110 of the first housing 106. In some cases, the power supply may be a battery, which may be replaceable or rechargeable. In other cases, the power supply may receive mains power such as from a utility grid. In yet other cases, the power supply may include a combination of battery power and mains power, with the battery providing backup power in case of a mains power outage. In some examples, the power supply may also include a power management system to manage the power consumption of the electronic components 112 and the ultrasonic transducer assembly 108.

Referring to FIG. 1, the electronic components 112 housed within the cavity 110 of the first housing 106 may include one or more radios or other communication components. These communication components may be used to transmit data collected by the static fluid meter 100, such as flow rate measurements, to a remote location for monitoring and analysis. The communication components may include, for example, a radio frequency (RF) transmitter such as a cellular radio, a Wi-Fi radio, a Bluetooth radio, a Zigbee radio, or any other suitable wireless communication device. In some cases, the communication components may be configured to communicate with a utility network, a home area network, a building management system, or any other network or system capable of receiving and processing the transmitted data. The communication components may be disposed within the cavity 110 of the first housing 106 to protect them from exposure to moisture, contaminants, and other environmental conditions.

In some examples, the electronic components 112 may also include a display. The display may be used to present information related to the operation of the static fluid meter 100, such as the current flow rate, total volume of fluid measured, or other relevant data. The display may be a liquid crystal display (LCD), a light-emitting diode (LED) display, an organic light-emitting diode (OLED) display, or any other suitable type of display. The display may be disposed in or on the cover 116 or the first housing 106 of the register 102. For example, the display may be mounted on an exterior surface of the cover 116 or the first housing 106, or it may be embedded within the cover 116 or the first housing 106 with a viewing window provided for viewing the display. In some cases, the display may be configured to be visible without having to open or disassemble the static fluid meter 100, allowing for easy reading of the displayed information.

FIG. 2 is sectional view of a second example multi-part static fluid meter 200. The multi-part static fluid meter 200 is similar to the multi-part static fluid meter 100 of FIG. 1, except that it includes a U-shaped transmission path. The static fluid meter 200 includes a register 202 that couples to a meter body 204. The register 202 has a first housing 206 and the meter body 204 includes a second housing 220. A lower portion 206a of the first housing 206 fits within an opening 204a in an upper surface of the meter body 204. Thus, a bottom surface 206b of the first housing 206 defines a first portion of a flow passage and an interior of the second housing 220 defines a second portion of the flow passage. The register 202 also includes an ultrasonic transducer assembly 208, including a first ultrasonic transducer 208a and a second ultrasonic transducer 208b, disposed in the first housing 206.

The meter body 204 is separate from and coupled to the register 202. The meter body 204 includes the second housing 220 defining the second portion of the flow passage. Within the flow passage, in this example two reflectors, a first reflector 224a and a second reflector 224b, are positioned to reflect ultrasonic signals emitted by the ultrasonic transducer assembly 208. The first reflector 224a and the second reflector 224b in this example are positioned to create a U-shaped or horseshoe-shaped transmission path, in which ultrasonic signals emitted by an emitting transducer are reflected in a U-shaped path through the fluid in the flow passage to a receiving transducer. Thus, the positions and angles of the reflectors 224a and 224b are different than those described for the example of FIG. 1.

In some aspects, the reflectors 224a and 224b may be supported by one or more support structures 226 which position the reflectors at the desired angle to achieve the transmission path. The support structures 226, when present, may be formed integrally with (e.g., molded features of) the first housing 206, the second housing 220, and/or a liner (not shown in FIG. 2). Additionally or alternatively, one or more support structures 226 may be formed separately (e.g., as a machined metal part) and coupled to the first housing 206, the second housing 220, and/or a liner (not shown in FIG. 2) by, for example, a fastener, adhesive, welding, or other suitable coupling mechanism.

Except as described herein, the remaining structure of the example static fluid meter 200 of FIG. 2 is the same as that described for the static fluid meter 100 of FIG. 1.

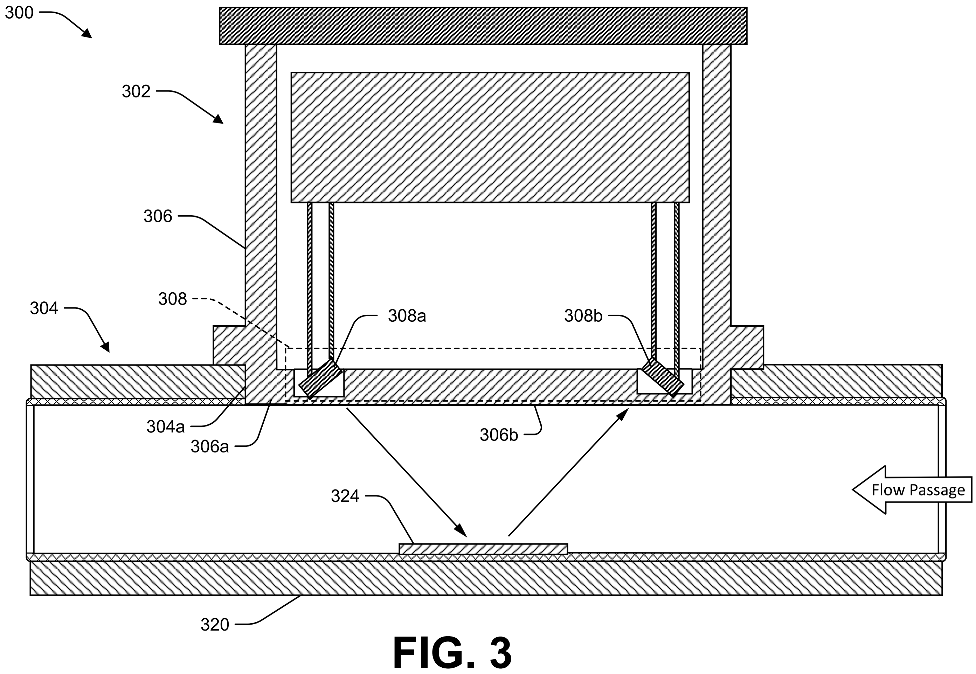

FIG. 3 is sectional view of a third example multi-part static fluid meter 300. The multi-part static fluid meter 300 is similar to the multi-part static fluid meter 100 of FIG. 1, except that it includes a V-shaped transmission path. The static fluid meter 300 includes a register 302 that couples to a meter body 304. The register includes a first housing 306 and the meter body 304 includes a second housing 320. A lower portion 306a of the first housing 306 of the register 302 fits within an opening 304a in an upper surface of the second housing 320 of the meter body 304. Thus, a bottom surface 306b of the first housing 306 defines a first portion of a flow passage and an interior of the second housing 320 defines a second portion of the flow passage. The register 302 also includes an ultrasonic transducer assembly 308, including a first ultrasonic transducer 308a and a second ultrasonic transducer 308b, disposed in the first housing 306.

The meter body 304 is separate from and coupled to the register 302. The meter body 304 includes the second housing 320 defining the second portion of the flow passage. Within the flow passage, in this example a single reflector 324 is positioned to reflect ultrasonic signals emitted by the ultrasonic transducer assembly 308. The reflector 324 in this example is positioned on a wall of the housing 320 opposite the transducers 308a and 308b to create a V-shaped transmission path, in which ultrasonic signals emitted by an emitting transducer are reflected in a V-shaped path through the fluid in the flow passage to a receiving transducer. Thus, the position and angle of the reflector 324 is different than those described for the examples of FIG. 1 and FIG. 2.

In this example, the reflector 324 is positioned flat on an interior wall of the second housing 320 in the flow passage. However, in other examples, the reflector 324 may be supported by one or more support structures (not shown in this example). The support structures, when present, may be formed integrally with (e.g., molded features of) the first housing 306, the second housing 320, and/or a liner (if present). Additionally or alternatively, one or more support structures may be formed separately and coupled to the first housing 306, the second housing 320, and/or a liner (if present) by, for example, a fastener, adhesive, welding, or other suitable coupling mechanism.

Except as described herein, the remaining structure of the example static fluid meter 300 of FIG. 3 is the same as that described for the static fluid meter 100 of FIG. 1.

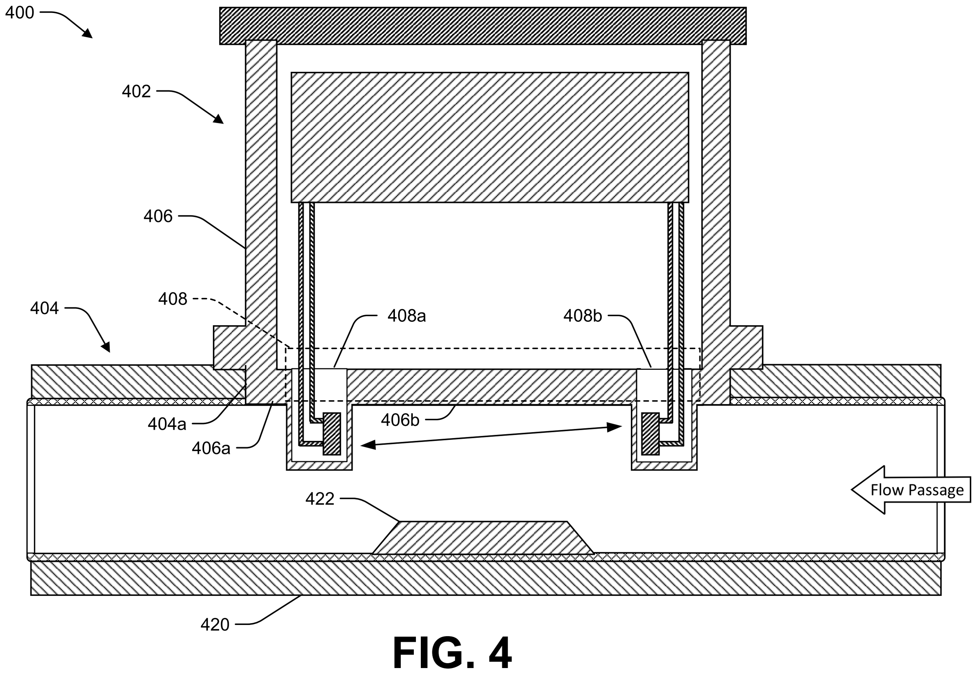

FIG. 4 is a sectional view of a fourth example static fluid meter 400 with a face-to-face transmission path. The multi-part static fluid meter 400 is similar to the multi-part static fluid meter 100 of FIG. 1, except that it includes a face-to-face transmission path which avoids the need for reflectors. The static fluid meter 400 includes a register 402 that couples to a meter body 404. The register includes a first housing 406 and the meter body 404 includes a second housing 420. A lower portion 406a of the first housing 406 of the register 402 fits within an opening 404a in an upper surface of the second housing 420 of the meter body 404. Thus, a bottom surface 406b of the first housing 406 defines a first portion of a flow passage and an interior of the second housing 420 defines a second portion of the flow passage.

The register 402 also includes an ultrasonic transducer assembly 408, including a first ultrasonic transducer 408a and a second ultrasonic transducer 408b, disposed in the first housing 406. In this example, the first ultrasonic transducer 408a is positioned facing the second ultrasonic transducer 408b. The first ultrasonic transducer 408a and the second ultrasonic transducer 408b are spaced apart from one another along a length of the flow path. The first ultrasonic transducer 408a and the second ultrasonic transducer 408b may aligned with one another (i.e., protruding a same distance into the flow passage relative to the bottom surface 406b of the first housing 406), or they may be offset from one another (i.e., with the first ultrasonic transducer 408a protruding a first distance into the flow passage relative to the bottom surface 406b of the first housing 406, and the second ultrasonic transducer protruding a second distance into the flow passage different (greater or less) than the first distance). In this example, the flow rate of fluid can be measured as it flows past/between the first ultrasonic transducer 408a and the second ultrasonic transducer 408b. One or more guide structures 422 may be positioned in the flow path to direct a flow of fluid to pass between the first ultrasonic transducer 408a and the second ultrasonic transducer 408b. In the illustrated example, a guide structure 422 in the form of a wedge along a bottom edge of the flow passage forces the flow of fluid upward into a space between the first ultrasonic transducer 408a and the second ultrasonic transducer 408b such that the flowrate of fluid between the first ultrasonic transducer 408a and the second ultrasonic transducer 408b can be measured. In other examples, one or more other guide structures 422 such as vanes, wedges, troughs, channels, or the like can be used to direct flow of the fluid such that it flows through at least a portion of the space between the first ultrasonic transducer 408a and the second ultrasonic transducer 408b.

Except as described herein, the remaining structure of the example static fluid meter 400 of FIG. 4 is the same as that described for the static fluid meter 100 of FIG. 1.

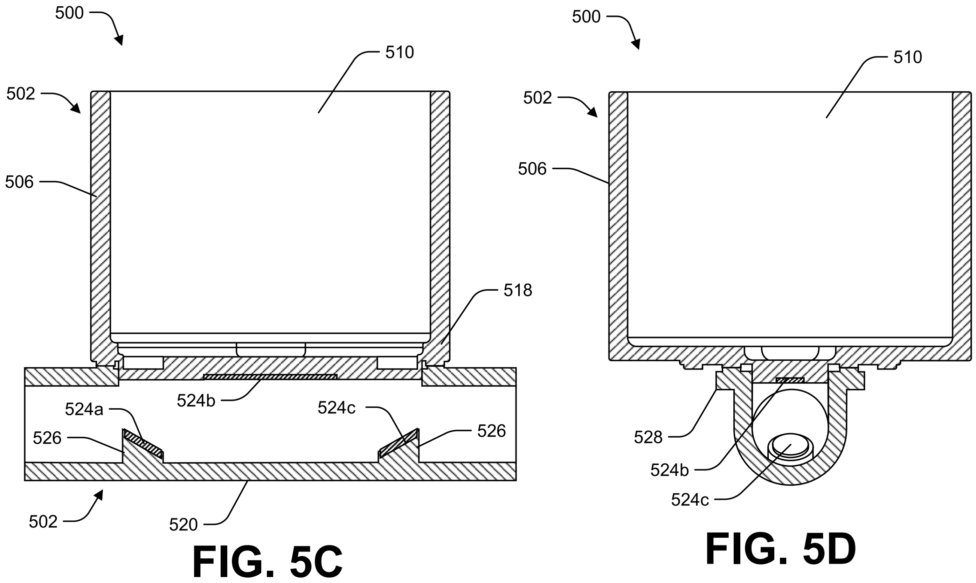

FIG. 5A and FIG. 5B illustrate perspective and side views, respectively, of a fourth example multi-part static fluid meter 500. The multi-part static fluid meter 500 comprises a register 502 and a meter body 504. The register 502 includes a first housing 506. The register 502 also includes a cavity 510 for receiving electronic components (not shown in FIGS. 5A-5G for clarity). The first housing 506 of the register 502 in this example is generally cylindrical and includes a flange 518 disposed around a perimeter of the first housing 506. The flange 518 includes multiple mating surfaces (described further below in relation to FIGS. 5C-5G) configured to mate with multiple different meter body configurations.

The meter body 504, which is separate from and coupled to the register 502, includes a second housing 520 which is generally cylindrical in this example. The second housing 520 includes an opening sized to receive a lower portion of the register 502. A flow tube flange 528 is disposed around a perimeter of the opening in the second housing 520 and contacts a mating surface of the register 502 surrounding the opening. The flow tube flange 528 can be coupled to the mating surface of the register 502 to seal the register 502 to the meter body 504.

FIG. 5C is a section view of the multi-part static fluid meter 500 taken along line C-C in FIG. 5A, and FIG. 5D is a section view of the multi-part static fluid meter 500 taken along line D-D in FIG. 5B. FIG. 5C illustrates that the first housing 506 is generally cylindrical and has a generally U-shaped cross-section with vertical side walls and a horizontal top surface. However, in other examples, the first housing 506 can be a rectangular prism, a parallelepiped, or any other volumetric shape sized and shaped to house the electronic components and to mate with the meter body 504. The first housing 506 includes a cavity 510 for receiving electronic component(s) of the static fluid meter 500. The electronic components are omitted in this example for clarity and to focus on the structure of the first housing 506 and second housing 520. However, the electronic components of the fourth example static fluid meter 500 may be the same or different than those of the first example static fluid meter 100 of FIG. 1. A cover of the multi-part static fluid meter 500 is omitted in this example for clarity. However, it should be understood that a cover may be coupled to the first housing 506 to seal the cavity 510 against ingress of moisture.

The meter body 504, which is separate from and coupled to the register 502, includes a second housing 520. As best seen in FIG. 5D, the second housing 520 comprises a generally cylindrical body adjoined by tangentially extending sidewalls which terminate in a flow tube flange 528. The second housing 520 has an opening in its cylindrical wall (the upper wall as illustrated in FIG. 5C) to receive a lower surface of the register 502. A first mating surface 530 of the register 502 mates with a mating surface on the flow tube flange 528 the meter body 504 during manufacturing or assembly. When the register 502 is coupled to the meter body 504, the bottom surface of the register 502 defines a first portion of a flow passage and the second housing 520 of the meter body 504 defines a second portion of the flow passage. Thus, the bottom surface of the first housing 506 and an interior cylindrical wall of the second housing 520 collectively define the flow passage. The distal ends of the flow passage are open to connect to a fluid pipe of a service site.

The multi-part static fluid meter 500 includes two reflectors, a first reflector 524a and a second reflector 524b, disposed within the second housing 520 of the meter body 504, and a third reflector 524c disposed on the lower exterior surface of the first housing 506 of the register 502. In this example, the first reflector 524a and the third reflector 524c are held in position by a support structure 526 formed integrally with the second housing 520. The three reflectors define a transmission path to reflect ultrasonic signals emitted by a transducer assembly (not shown in FIGS. 5C-5D).

In some examples, the first housing 506 and the second housing 520 are formed of a same material, such as any of the thermoplastic materials described herein. In some examples, the first housing 506 is thermoplastically welded to the second housing 520, providing a secure and fluid tight connection between the two components. In other examples, the first housing 506 may be mechanically coupled to the second housing 520 by additional or alternative means (e.g., adhesive, press fit, rivets, screws, etc.). Regardless of the method of connecting the first housing 506 and the second housing 520, an interior of the first housing 506 (e.g., cavity 510) is fluidly isolated from the flow passage, protecting electronic components within the register 502 from exposure to moisture or other contaminants.

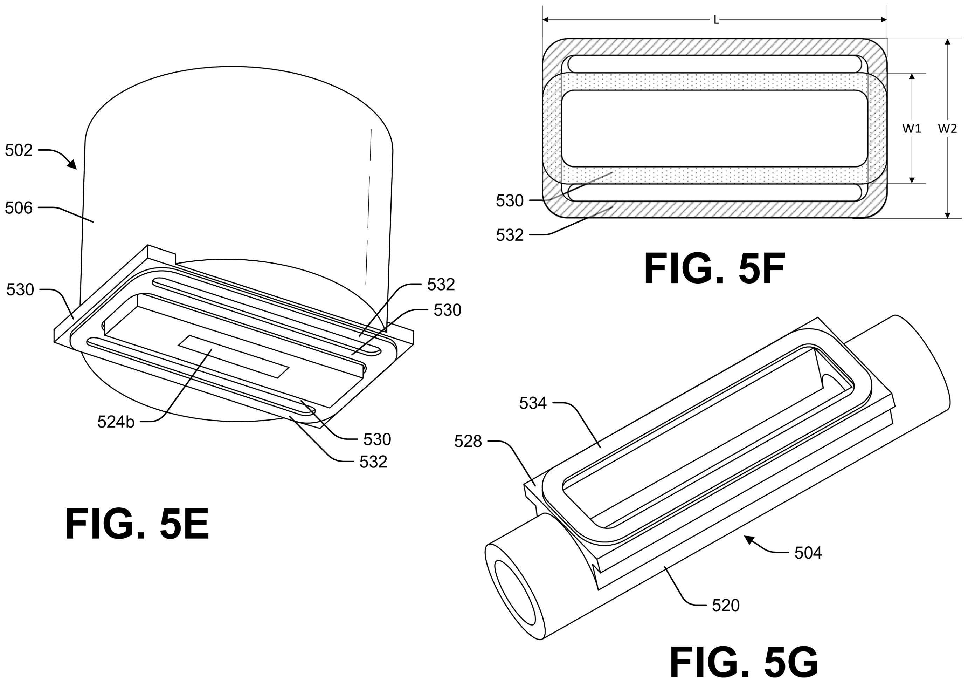

FIG. 5E is a bottom perspective view of the register 502 showing multiple mating surfaces, such as a first mating surface 530 and a second mating surface 532. The inclusion of multiple mating surfaces configures the first housing 506 of the register 502 to mate with multiple different meter body configurations. This design allows a single register 502 to be compatible with various meter bodies 504, enhancing modularity and reducing manufacturing complexity. The meter body 504 mates with one mating surface of the multiple mating surfaces of the first housing 506. In some examples, meter bodies that can mate with the register 502 may have flow passage diameters ranging from about 10 millimeters to about 50 millimeters, accommodating different pipe sizes commonly used in water or other fluid distribution systems. However, meter bodies having flow passage diameters larger and smaller than this range are also within the scope of this disclosure.

FIG. 5E illustrates an underside of the first housing 506. The flange 518 is substantially rectangular and is disposed around on a portion of the base of the first housing 506. A central portion of the base of the first housing 506 protrudes beyond the flange 518 and fits into the opening in housing 520 of the meter body 504. The second reflector 524b is disposed on this central portion of the base of the first housing 506 such that when the first housing 506 is coupled to the second housing 520 the second reflector 524b is disposed in the flow passage. The flange 518 includes the first mating surface 530 and the second mating surface 532. The inclusion of multiple mating surfaces configures the first housing 506 to mate with multiple different meter body configurations. This design allows a single register 502 to be compatible with various meter bodies 504, enhancing modularity and reducing manufacturing complexity. As shown in FIG. 5E, the first mating surface 530 and the second mating surface 532 comprise relatively narrow bands or ribbons that protrude slightly from the base of the flange 518. Because the first mating surface 530 and the second mating surface 532 are relatively narrow bands that protrude slightly, they have relatively smaller cross-sectional area than the surrounding flange 518, which promotes melting and provides a uniform and consistent bond during the thermoplastic welding process (in examples in which the first housing 506 and second housing 520 are made of a thermoplastic material).

FIG. 5F is a plan view illustrating the base of the first housing 506 in more detail, while omitting other details of the register 502, to better illustrate the first mating surface 530 and the second mating surface 532. In this figure, the first mating surface 530 is illustrated by stippling and is shown to have a length L and a width W1. The second mating surface 532 is illustrated by a cross hatch pattern and has a length L and a width W2. Thus, in this example the second mating surface 532 overlaps a portion of the first mating surface 530 (where the stippling and the crosshatching overlap). However, in other examples, the first and second mating surfaces may be entirely non-overlapping (e.g., the second mating surface may entirely circumscribe and encompass the first mating surface). As illustrated, the second mating surface 532 has a perimeter (2L + 2W2) that is larger than a perimeter of the first mating surface 530.

FIG. 5G is a perspective view of the meter body 504 separate from the register 502. Fig. 5G illustrates the opening in the sidewall of the second housing 520 sized to receive the lower portion of the register 502. As shown, the flow tube flange 528 is disposed around a perimeter of the opening in the second housing 520 and is configured to contact a mating surface of the register 502. The flow tube flange 528 includes a flow tube mating surface 534. When the register 502 is coupled to the meter body 504, the flow tube mating surface 534 is configured to contact and seal against one of the mating surfaces of the register 502 to seal the meter body 504 to the register 502. The flow tube mating surface 534 in this example comprises a narrow, raised band protruding slightly from the flow tube flange 528, which has a relatively smaller cross-sectional area than the surrounding flange which in turn promotes melting and provides a uniform and consistent bond during the thermoplastic welding process (in examples in which the first housing 506 and second housing 520 are made of a thermoplastic material). Additionally or alternatively, in some examples the flow tube mating surface 534 may be textured and/or have a roughened surface finish (relative to other portions of the flow tube flange 528 and/or housing 520) to further promote melting and bonding of the flow tube mating surface during connection to the register 502.

Except as described herein, the structure of the example static fluid meter 500 of FIGS. 5E-5G is the same as that described for the static fluid meter 100 of FIG. 1. Also, while the example static fluid meter 500 is shown having a W-shaped transducer path arrangement, similar to the example of FIG. 1, in other examples, multi-part fluid meters having housing structures like the example of FIGS. 5A-5G may be adapted to include any suitable transducer path, such as but not limited to those shown in any of FIGS. 2-5. Also, while certain features, such as the multiple mating surfaces, are described in the context of the example static fluid meter 500, such features are not limited to the example of FIGS. 5A-5G. Rather, any of the static fluid meter configurations described herein may be adapted to include multiple mating surfaces adapted to engage with meter bodies of multiple different sizes.

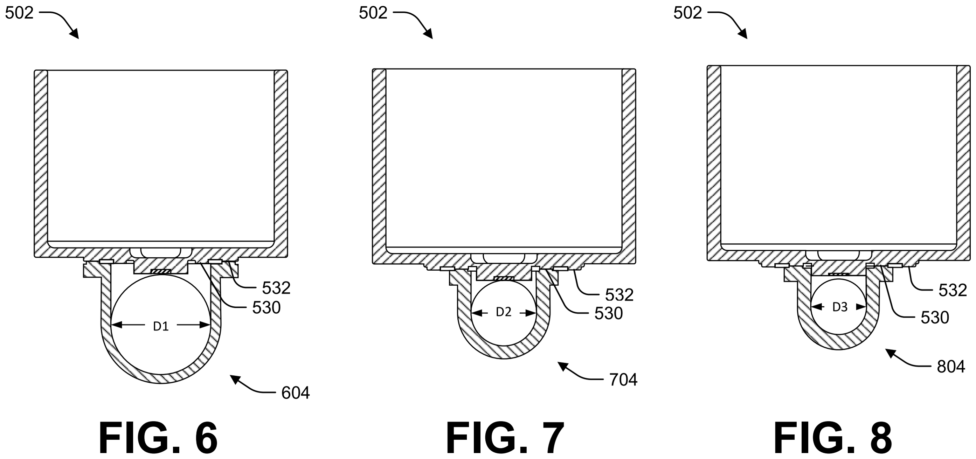

FIGS. 6-8 are simplified cross-sectional views showing the register 502 of the fourth example static fluid meter 500, coupled to multiple different sized meter bodies. Specifically, FIG. 6 illustrates the register 502 coupled to a large meter body 604 having a flow passage diameter D1, FIG. 7 illustrates the register 502 coupled to a medium meter body 704 having a flow passage diameter D2 which is smaller than D1, and FIG. 8 illustrates the register 502 coupled to a small meter body 804 having a flow passage diameter D3 which is smaller than both D1 and D2.

As shown in these figures, the different meter bodies are coupled to different mating surfaces of the register 502 depending on their size. In the illustrated example, the small meter body 804 and the medium meter body 704 are coupled to a first mating surface 530 (or inner mating surface) of the register 502, while the large meter body 604 is coupled to the second mating surface 532 (or outer mating surface) of the register 502. However, in other examples, the size, shape, and position of the flow tube flange and/or the flow tube mating surface of each of the meter bodies described herein (104, 204, 304, 404, 504, 604, 704, and/or 804) may be modified to be larger, smaller, wider, narrower, or positioned differently in order to mate with one or more of the mating surfaces of the register. Further, in some examples, the register 502 may have more than two mating surfaces (e.g., three, four, five, etc.) and the mating surfaces may have different sizes, shapes, and/or positions to facilitate mating with multiple different sized meter bodies. Further, in some examples, a mating surface of a meter body can mate with multiple the mating surfaces of a register. For instance, a mating surface of the meter body may span at least portions of two separate mating surfaces of the register. In some examples, D1, D2, and D3 may represent flow passage diameters ranging from about 10 millimeters to about 50 millimeters (about 3/8 of an inch to about 2 inches) accommodating different pipe sizes commonly used in water or other fluid distribution systems, though larger and smaller diameters are also possible. In some specific examples, D1 may be a flow passage diameter of about 32 millimeters, D2 may represent a flow passage diameter of about 20 millimeters, and D3 may represent a flow passage diameter of about 15 millimeters.

### EXAMPLE CLAUSES

While the example clauses described below are described with respect to one or more particular implementations, it should be understood that, in the context of this document, the content of the example clauses can also be implemented in other forms (e.g., meters, valves, devices, etc.) and/or another implementations. Additionally, any of examples A-T may be implemented alone or in combination with any other one or more of the examples A-T.
A. A multi-part static fluid meter comprising: a register comprising: (i) a first housing, the first housing defining a first portion of a flow passage configured to receive a flow of fluid to be measured; and an ultrasonic transducer assembly disposed in the first housing; and (ii) a meter body separate from and coupled to the register, the meter body comprising a second housing defining a second portion of the flow passage.
B. The multi-part static fluid meter of claim A, wherein the first housing and the second housing are formed of a same material.
C. The multi-part static fluid meter of claim A, wherein the first housing and the second housing are formed of plastic.
D. The multi-part static fluid meter of claim A, wherein the first housing is thermoplastically welded to the second housing.
E. The multi-part static fluid meter of claim A, wherein an interior of the first housing is fluidly isolated from the flow passage.
F. The multi-part static fluid meter of claim A, wherein the first housing comprises multiple mating surfaces configured to mate with multiple different meter body configurations, and wherein the meter body mates with at least one mating surface of the multiple mating surfaces of the first housing.
G. The multi-part static fluid meter of claim F, wherein the multiple mating surfaces of the first housing comprise a first mating surface having a first perimeter and a second mating surface having a second perimeter which is larger than the first perimeter.
H. The multi-part static fluid meter of claim A, wherein the flow passage of the meter body has a diameter between about J millimeters and about AX millimeters.
I. The multi-part static fluid meter of claim A, wherein the ultrasonic transducer assembly comprises a W-shaped transmission path, a U-shaped transmission path, a V-shaped transmission path, or a face-to-face transmission path.
J. The multi-part static fluid meter of claim A, wherein the ultrasonic transducer assembly comprises a first ultrasonic transducer, a second ultrasonic transducer, and a reflector disposed in the flow passage to reflect a signal from the first ultrasonic transducer along a transmission path toward the second ultrasonic transducer.
K. The multi-part static fluid meter of claim J, wherein the reflector comprises a first reflector coupled to the second housing of the meter body, and the register further comprises a second reflector coupled to an exterior surface of the first housing and within the flow passage, and the meter body further comprises a third reflector coupled to the second housing of the meter body.
L. A static fluid meter comprising: (i) a housing comprising multiple mating surfaces configured to mate with multiple different meter body configurations; (ii) a meter body separate from the housing and coupled to at least one mating surface of the multiple mating surfaces of the housing, the meter body comprising a flow passage configured to receive a flow of fluid to be measured; and (iii) an ultrasonic transducer assembly disposed in the housing configured to emit an ultrasonic signal through at least a portion of the flow passage to measure the flow of fluid through the flow passage.
M. The static fluid meter of claim L, wherein: the housing comprises a first housing which forms a first portion of the flow passage; and the meter body comprises a second housing which forms a second portion of the flow passage.
N. The static fluid meter of claim M, wherein the first housing and the second housing are formed of a same material.
O. The static fluid meter of claim M, wherein the first housing and the second housing are formed of plastic, and the first housing is thermoplastically welded to the second housing.
P. The static fluid meter of claim L, wherein an interior of the housing is fluidly isolated from the flow passage.
Q. The static fluid meter of claim L, wherein the multiple mating surfaces of the housing comprise a first mating surface having a first perimeter, and a second mating surface having a second perimeter which is larger than the first perimeter.
R. The static fluid meter of claim L, wherein the ultrasonic transducer assembly comprises a face-to-face transmission path, a W-shaped transmission path, a U-shaped transmission path, or a V-shaped transmission path.
S. The static fluid meter of claim L, wherein the ultrasonic transducer assembly comprises a first ultrasonic transducer and a second ultrasonic transducer, and a reflector is disposed in the flow passage to reflect a signal from the first ultrasonic transducer along a transmission path toward the second ultrasonic transducer.
T. The static fluid meter of claim S, wherein the reflector comprises a first reflector of the meter body disposed in the flow passage, and the static fluid meter further comprises a second reflector disposed on an exterior surface of the housing and within the flow passage, and the meter body further comprises a third reflector disposed in the flow passage.

### CONCLUSION

While one or more examples of the techniques described herein have been described, various alterations, additions, permutations and equivalents thereof are included within the scope of the techniques described herein. For example, while certain static fluid meter examples described in this application are described in the context of ultrasonic static water meters, the two-piece housing construction and other techniques described herein are applicable to static meters for measuring any type of fluid such as but not limited to water, oil, petroleum, natural gas, propane, and the like. Static fluid meters may be used at service sites in residential, commercial, and/or industrial settings.

Furthermore, although discussed primarily in the context of utility meters for delivery of fluid to a residential, commercial, or industrial service site, the methods, apparatuses, and systems described herein can be applied to a variety of fluid measurement systems and are not limited to utility meters used to measure delivery of a fluid to a service site. For example, the techniques can be utilized in industrial fluid monitoring, chemical processing, food and beverage production, or any system requiring precise fluid flow measurement. Additionally, the modular design principles outlined could be adapted for use in other types of metering or sensing devices beyond fluid measurement.

The techniques described herein can be implemented in a number of ways. While specific examples and configurations are provided, these are not intended to be limiting. Various modifications, substitutions, and alterations can be made to the described embodiments without departing from the spirit and scope of the invention as defined in the appended claims. For instance, different materials could be used for the housings, alternative welding or bonding techniques could be employed, more than two housing pieces or sections may be combined to form the structure of the static fluid meter, or the internal components could be arranged in different configurations while still adhering to the core principles of the multi-piece modular design. In the event that one or both of the first housing and/or the second housing are formed of a material other than a thermoplastic, such as metal (brass, steel, copper, stainless steel, aluminum, etc.), glass, ceramic, thermoset plastic, composites, or the like, the housings may be coupled together using other fasting means such as adhesive, press fit, threaded fit, rivets, screws, etc.

In the description of examples, reference is made to the accompanying drawings that form a part hereof, which show by way of illustration specific examples of the claimed subject matter. It is to be understood that other examples can be used and that changes or alterations, such as structural changes, can be made. Such examples, changes or alterations are not necessarily departures from the scope with respect to the intended claimed subject matter. While the steps herein can be presented in a certain order, in some cases the ordering can be changed so that certain inputs are provided at different times or in a different order without changing the function of the systems and methods described. The disclosed procedures could also be executed in different orders. Additionally, various computations that are herein need not be performed in the order disclosed, and other examples using alternative orderings of the computations could be readily implemented. In addition to being reordered, the computations could also be decomposed into sub-computations with the same results.

## Claims

1. A multi-part static fluid meter comprising:
a register comprising:
a first housing, the first housing defining a first portion of a flow passage configured to receive a flow of fluid to be measured; and
an ultrasonic transducer assembly disposed in the first housing; and
a meter body separate from and coupled to the register, the meter body comprising a second housing defining a second portion of the flow passage.

2. The multi-part static fluid meter of claim 1, wherein the first housing and the second housing are formed of a same material.

3. The multi-part static fluid meter of claim 1 or 2, wherein the first housing and the second housing are formed of plastic.

4. The multi-part static fluid meter of any preceding claim, wherein the first housing is thermoplastically welded to the second housing.

5. The multi-part static fluid meter of any preceding claim, wherein an interior of the first housing is fluidly isolated from the flow passage.

6. The multi-part static fluid meter of any preceding claim, wherein the first housing comprises multiple mating surfaces configured to mate with multiple different meter body configurations, and wherein the meter body mates with at least one mating surface of the multiple mating surfaces of the first housing.

7. The multi-part static fluid meter of claim 6, wherein the multiple mating surfaces of the first housing comprise a first mating surface having a first perimeter and a second mating surface having a second perimeter which is larger than the first perimeter.

8. The multi-part static fluid meter of any preceding claim, wherein the flow passage of the meter body has a diameter between about 10 millimeters and about 50 millimeters.

9. The multi-part static fluid meter of any preceding claim, wherein the ultrasonic transducer assembly comprises a W-shaped transmission path, a U-shaped transmission path, a V-shaped transmission path, or a face-to-face transmission path.

10. The multi-part static fluid meter of any preceding claim, wherein the ultrasonic transducer assembly comprises a first ultrasonic transducer, a second ultrasonic transducer, and a reflector disposed in the flow passage to reflect a signal from the first ultrasonic transducer along a transmission path toward the second ultrasonic transducer.

11. The multi-part static fluid meter of claim 10, wherein the reflector comprises a first reflector coupled to the second housing of the meter body, and the register further comprises a second reflector coupled to an exterior surface of the first housing and within the flow passage, and the meter body further comprises a third reflector coupled to the second housing of the meter body.

12. The multi-part static fluid meter of claim 10 or 11 wherein the reflector is made of metal, plastic, ceramic or glass.

13. The multi-part static fluid meter of claim 10, 11 or 12 wherein at least one of the reflectors is held in a desired position and/or orientation by one or more support structures.

14. The multi-part static fluid meter of claim 13 wherein the one or more support structures are formed integrally with the part of the multi-part static fluid meter with which they are coupled.

15. The multi-part static fluid meter of any preceding claim wherein the flow passage comprises a continuous and uniform cross section.
